# EUROPEAN PATENT APPLICATION

(11) **EP 3 232 391 A1**
(43) Date of publication of application: **18.10.2017**
(21) Application number: 17166507.8
(22) Date of filing: 13.04.2017
(51) Int. Cl.: G06Q 30/02, G06Q 20/38

(54) **ELECTRONIC DEVICE AND PAYMENT METHOD USING THE SAME**

(30) Priority: 15.04.2016 KR 20160046211
(71) Applicant: Samsung Electronics Co., Ltd., Gyeonggi-do 16677 (KR)
(72) Inventor: CHUNG, Kwangsun, 16677 Gyeonggi-do (KR); PARK, Joonsang, 16677 Gyeonggi-do (KR); SONG, Jooeun, 16677 Gyeonggi-do (KR); KIM, Youngkyoo, 16677 Gyeonggi-do (KR); JE, Seongmin, 16677 Gyeonggi-do (KR)
(74) Representative: Grootscholten, Johannes A.M.

(57) **Abstract**

Disclosed is a method for split payment for an online or offline purchase of a service or goods using an electronic device, including receiving a first request in relation to a payment, generating first payment information using a transaction identification corresponding to the payment based on at least the first request, sending the first payment information to an external device, receiving a second request in relation to the payment, generating second payment information using the transaction identification based on at least the second request, and finalizing the payment based on at least the second payment information.

## Description

### BACKGROUND

### 1. Field of the Disclosure

The present disclosure relates generally to an electronic device, and more particularly, to a payment method using the electronic device.

### 2. Description of the Related Art

With advances in mobile communication technologies, electronic devices can support voice call functions and various data communication functions. Electronic devices such as smartphones may provide various services through various applications, such as multimedia services related to music or video, digital broadcast services, and network based communication services related to calls, wireless Internet, short message service (SMS), or multimedia messaging service (MMS).

Electronic devices having evolved from simple communication means to multifunctional devices with communication, distribution, Internet, and payment capabilities may be used in various fields related to social, cultural, financial and distribution activities. Such an electronic device may support mobile payment as a payment option. The mobile payment service supported by the electronic device may include a payment function usable for online or offline purchase of a service or good (offline when payment is made at the physical point of purchasing a good at a physical store or restaurant). The electronic device may also support a communication function to send or receive payment information.

For a purchase of a service or good, a lump sum payment or a split payment may be made. In a lump sum payment, a full payment may be made at the time of purchase, while in split payment, a reservation may be made with an initial deposit and the remaining balance may be paid at the time of delivery. The split payment method may encourage sellers and buyers to establish safe business relationships. In a business deal of a specific form, a split payment may be preferred by at least one of the seller and the buyer. For example, a split payment may be preferred by a restaurant receiving customers who have made a reservation because the restaurant can reduce the loss due to customers not showing up after making the reservation.

At this time, however, there is no such sufficient split payment method in the art. As such, there is a need in the art for a device and method supporting split payment in electronic devices, for the convenience of merchants and customers.

### SUMMARY

The present disclosure has been made to address the above-mentioned problems and disadvantages, and to provide at least the advantages described below.

Accordingly, an aspect of the present disclosure is to provide an electronic device and payment method therefor that support a split payment for an online or offline purchase of a service or goods, thereby enhancing the convenience of the user and the seller.

In accordance with an aspect of the present disclosure, there is provided an electronic device including a communication interface that communicates with a first external device, and a processor functionally connected with the communication interface, wherein the processor is configured to receive a first request in relation to a payment, generate first payment information using a transaction identification corresponding to the payment based on at least the first request, send the first payment information to the first external device, receive a second request in relation to the payment, generate second payment information using the transaction identification based on at least the second request, and finalize the payment based on at least the second payment information.

In accordance with another aspect of the present disclosure, there is provided a method for payment using an electronic device, including receiving a first request in relation to the payment, generating first payment information using a transaction identification corresponding to the payment based on at least the first request, sending the first payment information to an external device, receiving a second request in relation to the payment, generating second payment information using the transaction identification based on at least the second request, and finalizing the payment based on at least the second payment information.

In accordance with another aspect of the present disclosure, there is provided a non-transitory computer readable storage medium having stored thereon instructions executable by at least one processor of an electronic device, wherein the instructions are configured to cause, when executed, the processor to receive a first request in relation to a payment, generate first payment information using a transaction identification corresponding to the payment and location information of the electronic device based on at least the first request, send the first payment information to an external device, receive a second request in relation to the payment, generate second payment information using the transaction identification based on at least the second request, and finalize the payment based on at least the second payment information.

### BRIEF DESCRIPTION OF THE DRAWINGS

The above and other aspects, features, and advantages of certain embodiments of the present disclosure will be more apparent from the following detailed description taken in conjunction with the accompanying drawings, in which:
FIG. 1 illustrates a network environment including electronic devices according to an embodiment of the present disclosure;
FIG. 2 is a block diagram of an electronic device according to an embodiment of the present disclosure;
FIG. 3 is a block diagram of a program module according to an embodiment of the present disclosure;
FIG. 4 illustrates a system according to an embodiment of the present disclosure;
FIG. 5 illustrates a payment process using a merchant terminal according to an embodiment of the present disclosure;
FIG. 6 illustrates an online payment process through the Internet according to an embodiment of the present disclosure;
FIG. 7 illustrates operations of the electronic device according to an embodiment of the present disclosure;
FIG. 8 illustrates operations of the electronic device according to an embodiment of the present disclosure;
FIG. 9 is a sequence diagram depicting a payment method using an electronic device according to an embodiment of the present disclosure;
FIG. 10 is a sequence diagram depicting a payment method using a token and cryptogram obtained from an external device according to an embodiment of the present disclosure;
FIG. 11 is a sequence diagram depicting a payment method additionally supporting a card-linked offer (CLO) service according to an embodiment of the present disclosure; and
FIG. 12 is a block diagram of an electronic device according to an embodiment of the present disclosure.

### DETAILED DESCRIPTION

The following description with reference to the accompanying drawings is provided to assist in a comprehensive understanding of embodiments of the present disclosure. It includes various specific details to assist in that understanding but these are to be regarded as merely exemplary. Accordingly, those of ordinary skill in the art will recognize that various changes and modifications of the embodiments described herein can be made without departing from the scope and spirit of the present disclosure. In addition, descriptions of well-known functions and constructions may be omitted for the sake of clarity and conciseness.

The terms and words used in the following description and claims are not limited to the bibliographical meanings, but, are merely used to enable a clear and consistent understanding of the present disclosure. Accordingly, it should be apparent to those skilled in the art that the following description of embodiments of the present disclosure is provided for illustrative purposes only and not for the purpose of limiting the present disclosure.

Singular forms "a," "an," and "the" include plural references unless the context clearly dictates otherwise. Thus, reference to "a component surface" includes reference to one or more of such surfaces.

The expressions such as "include" and "may include" may denote the presence of the disclosed functions, operations, and constituent elements and do not limit one or more additional functions, operations, and constituent elements. Terms such as "include" and/or "have" may be construed to denote a certain characteristic, number, operation, constituent element, component or a combination thereof, but may not be construed to exclude the existence of or a possibility of addition of one or more other characteristics, numbers, operations, constituent elements, components or combinations thereof.

In the present disclosure, the expression "and/or" includes any and all combinations of the associated listed words. For example, the expression "A and/or B" may include A, may include B, or may include both A and B.

Expressions including ordinal numbers, such as "first" and "second" may modify various elements that are not limited by the above expressions. For example, the above expressions do not limit the sequence and/or importance of the elements, but are used merely to distinguish an element from the other elements. For example, a first user device and a second user device indicate different user devices although both are user devices. In addition, a first element could be referred to as a second element, and similarly, a second element could be referred to as a first element without departing from the scope of the present disclosure.

When a component, such as a first component, is referred to as being "connected" or "accessed" to another component, such as a second component, it should be understood that the first component may be directly connected or accessed to the second component, or there may exist a third component between the first and second components. However, when a first component is referred to as being "directly connected" or "directly accessed" to a second component, there is no third component therebetween.

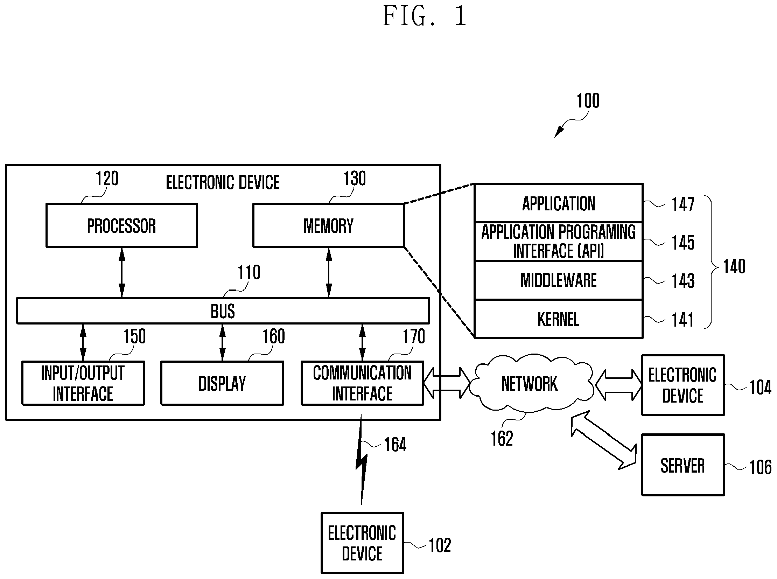

As used herein, the singular forms are intended to include the plural forms as well, unless the context clearly indicates otherwise. An electronic device according to an embodiment of the present disclosure may be a device including a communication function, including but not limited to, a smartphone, a tablet personal computer (PC), a mobile phone, a video phone , an e-book reader, a desktop PC, a laptop PC, a netbook computer, a personal digital assistant (PDA), a portable multimedia player (PMP), a digital audio player, a mobile medical device, an electronic bracelet, an electronic necklace, an electronic accessory, a camera, a wearable device, an electronic clock, a wrist watch, home appliances including an air-conditioner, vacuum, oven, microwave oven, washing machine, and air cleaner, an artificial intelligence robot, a television (TV), digital video disk (DVD) player, an audio device, various medical devices including magnetic resonance angiography (MRA), magnetic resonance imaging (MRI), computed tomography (CT), a scanning machine, an ultrasonic wave device, a navigation device, a global positioning system (GPS) receiver, an event data recorder (EDR), a flight data recorder (FDR), a set-top box, a TV box, such as Samsung HomeSync™, Apple TV™, or Google TV™, an electronic dictionary, vehicle infotainment device, electronic equipment for a ship, such as navigation equipment for a ship or a gyrocompass, avionics, a security device, electronic clothes, an electronic key, a camcorder, game consoles, a head-mounted display (HMD), a flat panel display device, an electronic frame, an electronic album, furniture or a portion of a building/structure that includes a communication function, an electronic board, an electronic signature receiving device, or a projector. FIG. 1 is a block diagram illustrating a configuration of an electronic device according to an embodiment of the present disclosure.

Referring to FIG. 1, the electronic device 100 includes a bus 110, a processor 120, a memory 130, an input/output interface 150, a display module 160, and a communication module 170. The electronic device 100 may also include other similar and/or suitable components.

The bus 110 may be a circuit which interconnects and delivers a communication between the above-described elements.

The processor 120 may receive commands from the above-described other elements through the bus 110, may interpret the received commands, and may execute calculation or data processing according to the interpreted commands.

The memory 130 may store commands or data received from the processor 120 or other elements or generated by the processor 120 or the other elements. The memory 130 includes programming modules 140, such as a kernel 141, middleware 143, an application programming interface (API) 145, and applications 147. Each of the above-described programming modules may be implemented in software, firmware, hardware, or a combination of two or more thereof.

The kernel 141 may control or manage system resources, such as the bus 110, the processor 120, and the memory 130, used to execute operations or functions implemented by other programming modules, such as the middleware 143, the API 145, and the applications 147). The kernel 141 may provide an interface capable of accessing and controlling or managing the individual elements of the electronic device 100 by using the middleware 143, the API 145, or the applications 147.

The middleware 143 may serve to go between the API 145 or the applications 147 and the kernel 141 in such a manner that the API 145 or the applications 147 communicates with the kernel 141 and exchanges data therewith. In relation to work requests received from one or more applications 147, the middleware 143may perform load balancing of the work requests by using a method of assigning a priority, in which system resources of the electronic device 100 can be used, to at least one of the one or more applications 147.

The API 145 is an interface through which the applications 147 are capable of controlling a function provided by the kernel 141 or the middleware 143, and may include at least one interface or function for file control, window control, image processing, or character control.

The input/output interface 150 may receive a command or data as input from a user, and may deliver the received command or data to the processor 120 or the memory 130 through the bus 110. The display module 160 may display a video, an image, or data to the user.

The communication module 170 may connect communication between another electronic device 102 and the electronic device 100. The communication module 170 may support a predetermined short-range communication protocol, such as Wi-Fi, BlueTooth® (BT), and near field communication (NFC), or predetermined network communication 162 including the Internet, a local area network (LAN), a wide area network (WAN), a telecommunication network, a cellular network, a satellite network, and a plain old telephone service (POTS). Each of the electronic devices 102 and 104 may be identical to or different from the electronic device 100, in terms of type. The communication module 170 may connect communication between a server 106 and the electronic device 100 via the network 162.

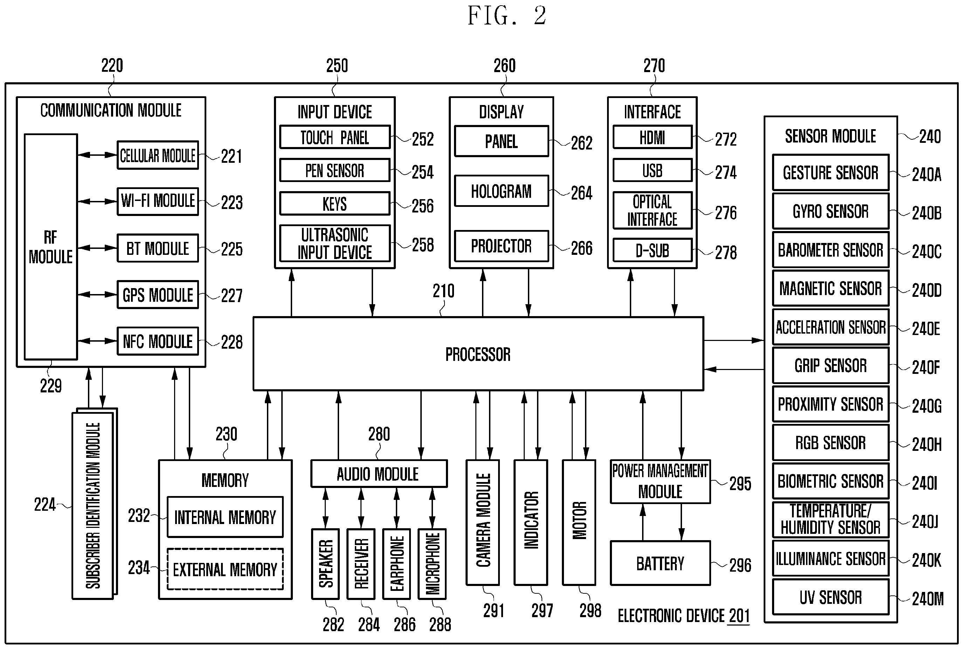

FIG. 2 is a block diagram illustrating a configuration of an electronic device 201 according to an embodiment of the present disclosure.

The electronic device 201 may be hardware.

Referring to FIG. 2, the electronic device 201 includes one or more processors 210, a communication module 220, a subscriber identification module (SIM) card 224, a memory 230, a sensor module 240, a input device 250, a display module 260, an interface 270, an audio module 280, a camera module 291, a power management module 295, a battery 296, an indicator 297, a motor 298. The electronic device 201 may also include any other similar and/or suitable components.

The application processor (AP) 210 may include one or more APs or communication processors (CPs). The AP 210 is illustrated as being included in the processor 210 in FIG. 2, but may be included in different integrated circuit (IC) packages, respectively, and may be included in one IC package.

The AP 210 may execute an operating system (OS) or an application program, and thereby may control multiple hardware or software elements connected to the AP 210 and may perform processing of and arithmetic operations on various data including multimedia data. The AP 210 may be implemented by a system on chip (SoC) and may further include a graphical processing unit (GPU).

The AP 210 may manage a data line and may convert a communication protocol in the case of communication between the electronic device including the electronic device 201 and different electronic devices connected to the electronic device through the network, and may perform at least some of multimedia control functions, such as distinguishing and authenticating a terminal in a communication network by using the SIM) card 224. The AP 210 may provide the user with services, such as a voice telephony call, a video telephony call, a text message, and packet data.

The AP 210 may control the transmission and reception of data by the communication module 220. In FIG. 2, the elements such as the AP 210, the power management module 295, and the memory 230 are illustrated as elements separate from the AP 210. However, the AP 210 may include at least some of the above-described elements.

The AP 210 may load, to a volatile memory, a command or data received from at least one of a non-volatile memory and other elements connected to each of the AP 210, may process the loaded command or data, and may store, in a non-volatile memory, data received from or generated by at least one of the other elements.

The SIM card 224 may implement a subscriber identification module, may be inserted into a slot formed in a particular portion of the electronic device 201, and may include unique identification information such as an integrated circuit card identifier (ICCID) or subscriber information such as international mobile subscriber identity (IMSI).

The memory 230 includes an internal memory 232 and an external memory 234. The internal memory 232 may include at least one of a volatile memory including a dynamic random access memory (DRAM), a static RAM (SRAM), a synchronous dynamic RAM (SDRAM), etc.), and a non-volatile memory including a one- time programmable read only memory (OTPROM), a programmable ROM (PROM), an erasable and programmable ROM (EPROM), an electrically erasable and programmable ROM (EEPROM), a mask ROM, a flash ROM, a Not AND (NAND) flash memory, and a Not OR (NOR) flash memory. The internal memory 232 may be in the form of a solid state drive (SSD). The external memory 234 may further include a flash drive, including a compact flash (CF), a secure digital (SD), a micro-secure digital (Micro-SD), a mini-secure digital (Mini-SD), an extreme digital (xD), and a memory stick.

The communication module 220 may include a cellular module 221, a radio frequency (RF) module 229, a Wi-Fi module 223, a Bluetooth (BT) module 225, a GPS module 227, and an NFC module 228. For example, the wireless communication module 220 may provide a wireless communication function by using a radio frequency, and may include a network interface including a local area network (LAN) card or a modulator/demodulator (modem)for connecting the electronic device 201 to a network.

The RF module 229 may be used for transmission and reception of RF signals or called electronic signals and may include a transceiver, a power amplifier module (PAM), a frequency filter, and a low noise amplifier (LNA). The RF module 229 may further include a component for transmitting and receiving electromagnetic waves in a free space in a wireless communication, such as a conductor or a conductive wire.

The sensor module 240 includes at least one of a gesture sensor 240A, a gyro sensor 240B, an barometer sensor 240C, a magnetic sensor 240D, an acceleration sensor 240E, a grip sensor 240F, a proximity sensor 240G, a red, green, blue (RGB) sensor 240H, a biometric sensor 240I, a temperature/humidity sensor 240J, an illuminance sensor 240K, and an ultra violet (UV) sensor 240M. The sensor module 240 may measure a physical quantity or may sense an operating state of the electronic device 201, and may convert the measured or sensed information to an electrical signal. Additionally/alternatively, the sensor module 240 may include an e-nose sensor, an electromyography (EMG) sensor, an electroencephalogram (EEG) sensor, an electrocardiogram (ECG) sensor, a fingerprint sensor, and a control circuit for controlling one or more sensors included therein.

The input device 250 includes a touch panel 252, a digital pen sensor254, keys 256, and an ultrasonic input unit 258. The touch panel 252 may recognize a touch input in at least one of, a capacitive, resistive, infrared, and acoustic wave scheme, and may further include a controller. In the capacitive type, the touch panel 252 is capable of recognizing proximity as well as a direct touch. The touch panel 252 may further include a tactile layer that provides a tactile response to the user.

The pen sensor 254 may be implemented by using a method identical or similar to a method of receiving a touch input from the user, or by using a separate sheet for recognition. For example, a key pad or a touch key may be used as the keys 256. The ultrasonic input unit 258 enables the terminal to sense a sound wave by using a microphone 288 of the terminal through a pen generating an ultrasonic signal, and to identify data. The ultrasonic input unit 258 is capable of wireless recognition. The electronic device 201 may receive a user input from an external device, such as a network, a computer, or a server, which is connected to the communication module 230, through the communication module 230.

The display module 260 includes a panel 262, a hologram 264, and projector 266. The panel 262 may be, a liquid crystal display (LCD) or an active matrix organic light emitting diode (AM-OLED) display, may be implemented so as to be flexible, transparent, or wearable, and may include the touch panel 252 and one module. The hologram 264 may display a three-dimensional image in the air by using interference of light. The display module 260 may further include a control circuit for controlling the panel 262 or the hologram 264.

The interface 270 may include a high-definition multimedia interface (HDMI) 272, a universal serial bus (USB) 274, an optical interface 276, and a d-subminiature (D-sub) 278. Additionally or alternatively, the interface 270 may include a secure digital (SD)/multi-media card (MMC) or infrared data association (IrDA).

The audio module 280 may bi-directionally convert between a voice and an electrical signal. The audio module 280 may convert voice information, which is input to or output from the audio module 280, through a speaker 282, a receiver 284, an earphone 286, or the microphone 288, for example.

The camera module 291 may capture an image and a moving image. The camera module 291 may include one or more image sensors, such as a front lens or a back lens, an image signal processor (ISP), and a flash LED.

The power management module 295 may manage power of the electronic device 201 and may include a power management integrated circuit (PMIC), a charger integrated circuit (IC), or a battery gauge.

The PMIC may be mounted to an IC or a SoC semiconductor. Charging methods may be classified into a wired and a wireless charging method. The charger IC may charge a battery, and may prevent an overvoltage or an overcurrent from charger to battery. The charger IC may include a charger IC for at least one of the wired and the wireless charging methods, such as magnetic resonance, magnetic induction, or electromagnetic methods. Additional circuits including a coil loop, a resonance circuit, or a rectifier for wireless charging may be added in order to perform the wireless charging.

The battery gauge may measure a residual quantity of the battery 296, or a voltage, a current or a temperature during the charging. The battery 296 may supply power by generating electricity, and may be a rechargeable battery.

The indicator 297 may indicate particular states of the electronic device 201 or a part of the electronic device 201, such as a booting, message, or charging state. The motor 298 may convert an electrical signal into a mechanical vibration. The processor 210 may control the sensor module 240.

The electronic device 201 may include a processing unit, such as a GPU, for supporting a mobile TV. The processing unit for supporting a mobile TV may process media data according to standards such as digital multimedia broadcasting (DMB), digital video broadcasting (DVB), and media flow. Each of the above-described elements of the electronic device 201 may include one or more components, and the name of the relevant element may change depending on the type of electronic device. The electronic device 201 may include at least one of the above-described elements. Some of the above-described elements may be omitted from the electronic device 201, or the electronic device 201 may further include additional elements that may be combined into one entity, which may perform functions identical to those of the relevant elements before the combination.

The term "module" used in the present disclosure may refer to a unit including one or more combinations of hardware, software, and firmware, may be interchangeably used with terms such as "unit," "logic," "logical block," "component," or "circuit", may be a minimum unit of a component formed as one body or a part thereof, may be a minimum unit for performing one or more functions or a part thereof, and may be implemented mechanically or electronically. For example, the "module" according to an embodiment of the present disclosure may include at least one of an application-specific integrated circuit (ASIC) chip, a field-programmable gate array (FPGA), and a programmable-logic device for performing certain operations which have been known or are to be developed in the future.

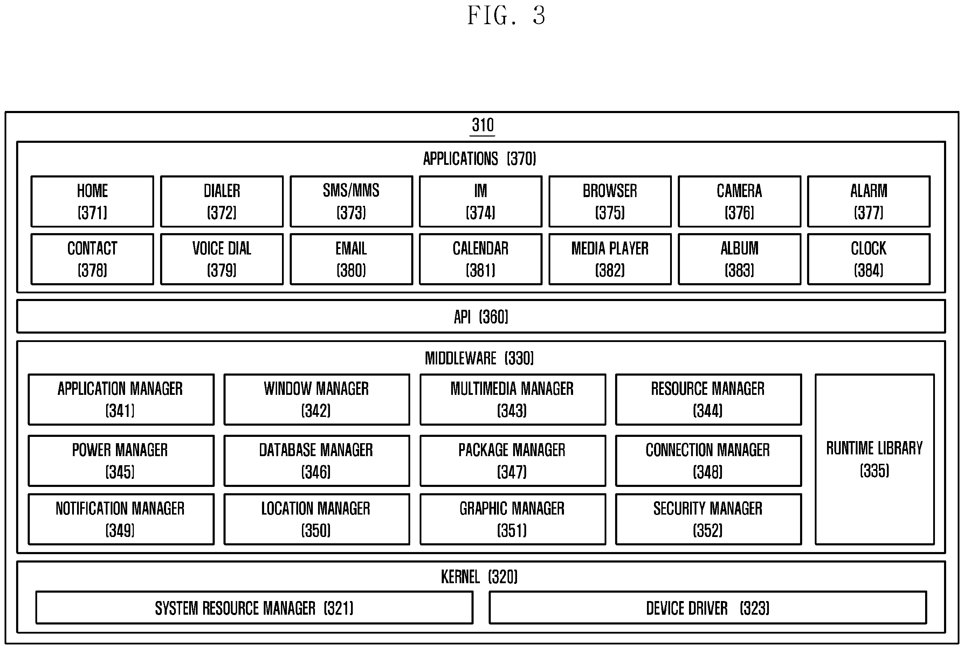

FIG. 3 is a block diagram illustrating a configuration of a programming module 310 according to an embodiment of the present disclosure.

The programming module 310 may be included (or stored) in the electronic device 201 or may be included (or stored) in the electronic device 100 illustrated in FIG. 1. At least a part of the programming module 310 may be implemented in software, firmware, hardware, or a combination of two or more thereof. The programming module 310 may be implemented in hardware, and may include an OS controlling resources related to an electronic device and/or various applications 370 executed in the OS. For example, the OS may be Android, iOS, Windows, Symbian, Tizen, or Bada.

Referring to FIG. 3, the programming module 310 includes a kernel 320, a middleware 330, an API 360, and the applications 370.

The kernel 320 includes a system resource manager 321 and a device driver 323. The system resource manager 321 may include a process manager, a memory manager, and a file system manager. The system resource manager 321 may perform the control, allocation, recovery, and/or the like of system resources. The device driver 323 may include a display driver, a camera driver, a Bluetooth driver, a shared memory driver, a USB driver, a keypad driver, a Wi-Fi driver, and/or an audio driver, and may further include an inter-process communication (IPC) driver.

The middleware 330 may include multiple modules previously implemented so as to provide a function used in common by the applications 370. The middleware 330 may provide a function to the applications 370 through the API 360 in order to enable the applications 370 to efficiently use limited system resources within the electronic device. For example, as illustrated in FIG. 3, the middleware 330 includes a runtime library 335, an application manager 341, a window manager 342, a multimedia manager 343, a resource manager 344, a power manager 345, a database manager 346, a package manager 347, a connectivity manager 348, a notification manager 349, a location manager 350, a graphic manager 351, and a security manager 352. The middleware 330 may also include any other suitable and/or similar manager.

The runtime library 335 may include a library module used by a complier, in order to add a new function by using a programming language during the execution of the applications 370. The runtime library 335 may perform functions which are related to input and output, the management of a memory, or an arithmetic function, for example.

The application manager 341 may manage a life cycle of at least one of the applications 370. The window manager 342 may manage GUI resources used on the screen. The multimedia manager 343 may detect a format used to reproduce various media files and may encode or decode a media file through a codec appropriate for the relevant format. The resource manager 344 may manage resources, such as a source code, a memory, a storage space, and/or the like of at least one of the applications 370.

The power manager 345 may operate together with a basic input/output system (BIOS), may manage a battery or power, and may provide power information and the like used for an operation. The database manager 346 may manage a database in such a manner as to enable the generation, search and/or change of the database to be used by at least one of the applications 370. The package manager 347 may manage the installation and/or update of an application distributed in the form of a package file.

The connectivity manager 348 may manage a wireless connectivity such as Wi-Fi and Bluetooth. The notification manager 349 may display or report, to the user, an event such as an arrival message, an appointment, or a proximity alarm in such a manner as not to disturb the user. The location manager 350 may manage location information of the electronic device. The graphic manager 351 may manage a graphic effect, which is to be provided to the user, and/or a user interface related to the graphic effect. The security manager 352 may provide various security functions used for system security and user authentication. When the electronic device has a telephone function, the middleware 330 may further include a telephony manager for managing a voice telephony call function and/or a video telephony call function of the electronic device.

The middleware 330 may generate and use a new middleware module through various functional combinations of the above-described internal element modules. The middleware 330 may provide modules specialized according to types of OSs in order to provide differentiated functions. The middleware 330 may dynamically delete some of the existing elements, or may add new elements. Accordingly, the middleware 330 may omit some of the elements described in the embodiments of the present disclosure, may further include other elements, or may replace the some of the elements with elements, each of which performs a similar function and has a different name.

The API 360 is a set of API programming functions, and may be provided with a different configuration according to an OS. In the case of Android or iOS, one API set may be provided to each platform. In the case of Tizen, two or more API sets may be provided to each platform.

The applications 370 may include a preloaded application and/or a third party application, and may include a home 371, dialer 372, SMS/ MMS373, instant message (IM) 374, browser 375, camera 376, alarm 377, contact 378, voice dial 379, electronic mail (e-mail) 380, calendar 381, media player 382, album 383, and clock application 384, and any of other suitable and/or similar applications.

At least a part of the programming module 310 may be implemented by instructions stored in a non-transitory computer-readable storage medium. When the instructions are executed by one or more processors, the one or more processors may perform functions corresponding to the instructions. The non-transitory computer-readable storage medium may be the memory 230. At least a part of the programming module 310 may be executed by the one or more processors 210. At least a part of the programming module 310 may include a module, a program, a routine, a set of instructions, and/or a process for performing one or more functions.

Names of the elements of the programming module 310 according to an embodiment of the present disclosure may change depending on the type of OS. The programming module according to an embodiment of the present disclosure may include one or more of the above-described elements. Alternatively, some of the above-described elements may be omitted from the programming module. Alternatively, the programming module may further include additional elements. The operations performed by the programming module or other elements may be processed in a sequential method, a parallel method, a repetitive method, or a heuristic method. Also, some of the operations may be omitted, or other operations may be added to the operations.

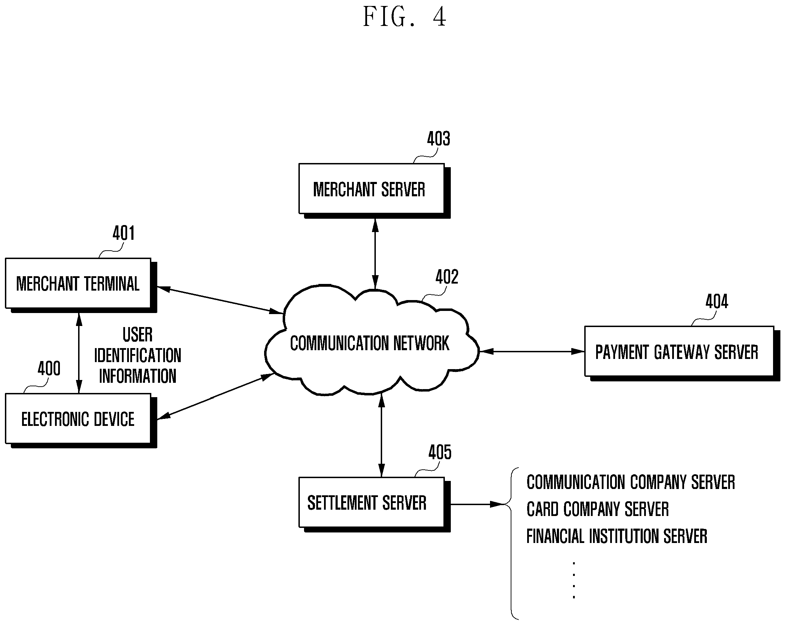

FIG. 4 illustrates a system according to embodiments of the present disclosure.

Referring to FIG. 4, the system includes an electronic device 400, a merchant terminal 401, a merchant server 403, a payment gateway server 404, and a settlement server 405. The above system constituents may be interconnected through a communication network 402.

When the user purchases a good or service and attempts to pay for the purchase using the electronic device 400, the payment may be processed through the merchant terminal 401, such as a point of sales (POS) terminal, installed in the member store.

The merchant terminal 401 may support both cash register functions and computer terminal functions such as calculating the amount of sales, and collecting and presenting various information and data needed for retail business. The merchant terminal 401 may include a barcode reader to automatically recognize barcodes, and an order information transmitter such as a near field communication (NFC) terminal. The payment gateway server 404 is managed by a value added network (VAN) company or payment gateway (PG) company, and may be a VAN server or a Samsung Pay server. The payment gateway server 404 resides between the merchant terminal 401 and the settlement server 405 to thereby relay information and data needed for electronic payment and settlement for the merchant terminal 401.

The settlement server 405 may be of a company or institution involved in the electronic payment process, such as a communication company server, a card company server, a financial institution server, a transportation company server, or a mobile settlement server. For example, the settlement server 405 may be one of a card company server, a financial institution server, a transportation company server, and a mobile settlement server.

The settlement server 405 may perform a settlement operation on the payment authorization request received from the merchant terminal 401 in consideration of the coupon information and discount rate, and send the payment authorization result to the electronic device 400 and the merchant terminal 401. The settlement server 405 may subtract the amount of money corresponding to the payment authorization request from the monetary value for advance or deferred payment stored in the SIM card embedded in the electronic device 400.

The payment process may be initiated through the merchant server 403 by entering user identification information pre-assigned to each user to the merchant terminal 401.

The user identification information may be entered to the merchant terminal 401 in various manners, such as by being directly entered by using an input means of the merchant terminal 401 (e.g. buttons or touchscreen). The user identification information stored in the electronic device 400 may be directly sent to the merchant terminal 401 through short-range wireless communication such as NFC. The electronic device 400 may store the user identification information in the form of a barcode and display the user identification information as a barcode, which may be scanned by the barcode reader of the merchant terminal 401 for input. The user identification information may be account information preset for identifying the user, and may be composed of, but not limited to, digits, characters, symbols, and a combination thereof.

The user identification information entered to the merchant terminal 401 may be sent to the merchant server 403 through the communication network 402, and may be sent to the merchant server 403 via the settlement server 405 (acting as the acquirer, e.g. VAN server such as a POS relay server). In addition to the user identification information, the merchant terminal 401 may send payment related information (e.g. information regarding the member store, amount to be paid, purchased product, and payment means) to the merchant server 403.

The merchant server 403 may be functionally connected with multiple merchant terminals 401. For example, the merchant server 403 may be managed by a franchise head office. The merchant server 403 functionally connected with merchant terminals 401 installed at individual branch stores may store payment related information of users and send stored payment related information of a specific user to a corresponding merchant terminal 401. The merchant server 403 may utilize user identification information received from the merchant terminal 401 to identify payment related information (e.g. available payment options) of a specific user, may identify payment related information (e.g. available payment means) of the corresponding member store, and may provide payment related information of the user and/or payment related information of the member store to the electronic device 400 to thereby enable payment using the electronic device 400.

The settlement server 405 may be a specific server capable of performing settlement operation, such as a communication company server, a card company server, a financial institution server, or a combination thereof according to the payment options.

The communication network 402 may include a wired network, a wireless network, and a mixed wired/wireless network, such as a personal area network (PAN), a local area network (LAN), a metropolitan area network (MAN), and a wide area network (WAN). The communication network 402 may use Internet or World Wide Web (WWW) technology and short-range wireless technology such as infrared data association (IrDA) and Bluetooth®. To receive broadcasting signals, the communication network 402 may include a cable television network, a terrestrial broadcasting network, and a satellite broadcasting network.

In accordance with an embodiment of the present disclosure, it is possible to provide a more efficient payment option to the user by combining offline and online payment methods using the electronic device 400.

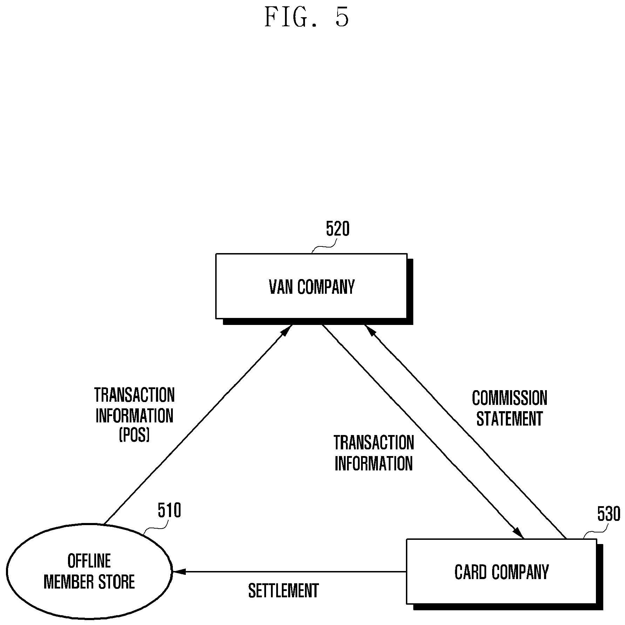

FIG. 5 illustrates an offline payment process using a merchant terminal according to an embodiment of the present disclosure.

Referring to FIG. 5, the offline member store 510 may make a payment request using the merchant terminal such as a POS terminal. The merchant terminal may send transaction information based on the payment request to the VAN company 520 acting as a payment gateway server. The VAN company 520 may forward the received transaction information to the corresponding card company 530, which may verify the received transaction information and send an authorization indication to the merchant terminal 401 at the offline member store 510 via the VAN company 520. After card use is successfully authorized through the merchant terminal, the offline member store 510 may provide a service or good to the customer, and may send a sales statement signed by the customer to the card company 530 via the VAN company 520. The card company 530 examines the sales statement received from the offline member store 510 and, if the sales statement is acceptable, may pay the offline member store 510 for the transaction by crediting the sales figure to the bank account of the offline member store 510. The card company 530 may make a settlement payment to the VAN company 520 by paying the VAN company 520 for an agreed brokerage fee.

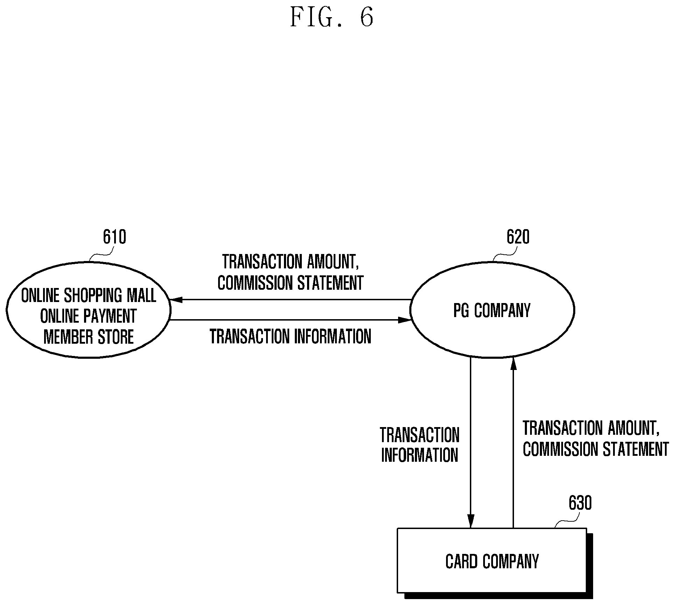

FIG. 6 illustrates an online payment process through the Internet, according to an embodiment of the present disclosure.

Referring to FIG. 6, online payment enables processing of a credit card transaction by exchanging card transaction information through the Internet, telephony or electronic mail without face-to-face communication between the seller and the buyer. Unlike offline payment described in FIG. 5, a payment gateway (PG) company 620 is involved in the transaction processing and operates similarly to the VAN company 520 so as to achieve efficient relay of credit card transaction information and security.

Specifically, when a customer makes an online payment request to an online shopping mall 610 (e.g. online member store), the online shopping mall 610 may send transaction information based on the payment request to the PG company 620 acting as a payment gateway server. The PG company 620 may forward the received transaction information to the corresponding card company 630, which may verify the received transaction information and send an authorization indication to the online shopping mall 610 via the PG company 620. After card use is successfully authorized, the online shopping mall 610 may provide a service or goods to the customer. The card company 630 may make a settlement payment to the PG company 620 by paying the PG company 620 for an agreed brokerage fee.

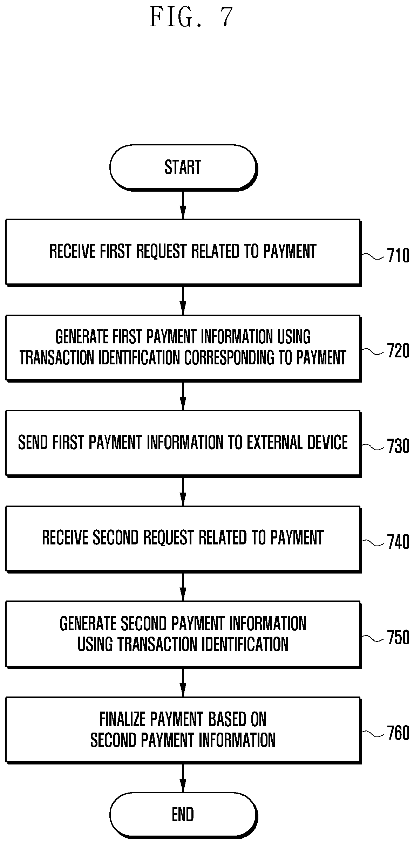

The electronic device may support both online payment and offline payment and additionally support split payment by combining online payment and offline payment. Prior to the description of FIG. 7, the following are aspects according to embodiments of the present disclosure, as previously described.

A method for payment using an electronic device may include receiving a first request in relation to a payment, generating first payment information using a transaction ID corresponding to the payment based on at least the first request, sending the first payment information to an external device, receiving a second request in relation to the payment; generating second payment information using the transaction ID based on at least the second request, and finalizing the payment based on at least the second payment information. The first request may be a request for deposit payment for a service or good in online mode, and the second request may be a request for balance payment for the service or good in offline mode. Generating first payment information may include obtaining the transaction ID from a first external device in response to the first request, obtaining a first token and a first cryptogram based on user authentication, and generating the first payment information based on the transaction ID, the first token, and the first cryptogram. Generating second payment information may include obtaining a second token and a second cryptogram in response to the second request, and generating the second payment information based on the transaction ID, the second token, and the second cryptogram.

The first external device may be a merchant server or a merchant terminal. The first and second tokens and the first and second cryptograms may be directly generated by the electronic device based on the user authentication and encryption keys stored in the memory, and may be obtained from a second external device by sending a corresponding request to the second external device. The second external device may be an electronic wallet server residing between the merchant server and a settlement server for relaying data transfer. The method may further include sending discount information supplied by the first external device to a third external device based on at least one of the first token and the first cryptogram. The third external device may be a card-linked offer (CLO) server configured to register the discount information received from the electronic device and provide registered discount information to merchant terminals.

FIG. 7 illustrates operations of the electronic device according to an embodiment of the present disclosure.

Referring to FIG. 7, the electronic device may receive a first request in relation to a payment in step 710, generate first payment information using transaction information corresponding to the payment in step 720, send the first payment information to an external device in step 730, receive a second request in relation to the payment in step 740, generate second payment information using the transaction information in step 750, and finalize the payment based on the second payment information in step 760.

The first request may be a reservation request for a service desired by the user and may be a deposit payment request for the service.

The external device may be a merchant server 403 or a merchant terminal 501 installed in an offline member store.

The second request may be a request for balance payment in offline mode for the service reserved or partially paid in advance.

The transaction information may be stored in the merchant server 403 or the electronic device 400, and may be used to establish a relationship between deposit payment and balance payment at the time of balance payment. For example, for a specific service, first transaction information generated at the time of deposit payment may be stored in the electronic device 400 of the customer, and may later be compared with second transaction information received by the merchant terminal 401 from the merchant server 403. If the first transaction information stored in the electronic device 400 is identical to the second transaction information obtained from the merchant terminal 401, the payment for the service may be authorized and finalized.

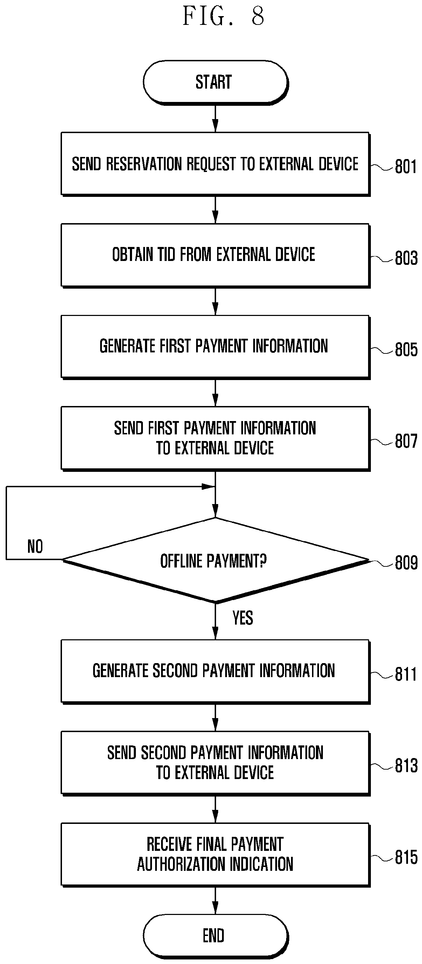

FIG. 8 illustrates operations of the electronic device according to an embodiment of the present disclosure.

Referring to FIG. 8, in step 801, the electronic device 400 sends a reservation request to an external device based on a payment command issued by the user for a specific service. The reservation request may be accompanied by a request for full lump sum payment for the service, or by a request for deposit payment and a request for a subsequent balance payment. The external device may be a merchant server 403. For example, the reservation request may be sent to the merchant server 403 of a franchise company having offline member stores, and may be used to make a reservation with an advance payment before visiting a specific offline member store. The external device may be a merchant terminal 401 installed in an offline member store without a separate merchant server 403. For example, when connected to the communication network 402, the merchant terminal 401 may receive the reservation request through the communication network 402.

For example, the electronic device 400 may receive a first request in relation to a payment for the service from the user. The first request may be a reservation request for a specific service to be purchased by the user, and may be accompanied by a request for a partial advance payment for the service. The advance payment associated with the first request may be performed in offline mode. However, as such an advance payment is made as a deposit, it may be preferable to make an advance payment in online mode. Hence, in this description, it is assumed that the first request for a service is a request for a partial advance payment to be processed in online mode.

The electronic device 400 may send a reservation request to the external device based on the first request. The external device may be a merchant terminal 401 or a merchant server 403. The reservation request sent by the electronic device 400 to the external device may include a transfer request for a transaction identification (TID) as described later herein.

In step 803, the electronic device 400 obtains a TID from the external device. As described above, the external device may be a merchant terminal 401 or a merchant server 403. For ease of description, it is assumed that the external device is a merchant server 403, which may issue a TID in response to the reservation request from the electronic device 400 of the user, and send the TID to the electronic device 400. For a specific service, the TID may be used to determine whether a first payment and a second payment made at different points in time are associated with the same transaction for the service. For example, the TID issued at the time of the advance payment may be stored in the merchant server 403 or the electronic device 400 and may be used to establish a relationship between the advance payment and the balance payment.

Specifically, in a payment for a specific service, a first TID issued at the time of the advance or deposit payment may be stored in the electronic device 400 of the customer, and may be compared with a second TID received from the merchant server 403 during offline payment with the merchant terminal 401. If the first TID stored in the electronic device 400 is identical to the second TID obtained from the merchant terminal 401, the payment for the service may be authorized and finalized.

In step 805, the electronic device 400 generates first payment information based on the TID obtained from the external device. For example, the electronic device 400 may determine the payment means (e.g., credit card) and obtain user authentication corresponding to the determined payment means. The electronic device 400 may obtain a first token and a first cryptogram based on the user authentication. The electronic device 400 may generate the first payment information based on the TID, first token, and first cryptogram. The first payment information generated by the electronic device 400 may contain location information of the merchant terminal 401. For example, the location information may be used by the merchant server 403 to forward the TID received from the electronic device 400 to the merchant terminal 401. Specifically, based on the location information received from the electronic device 400, the merchant server 403 may forward the TID received from the electronic device 400 to the corresponding merchant terminal 401.

The first payment information generated by the electronic device 400 may also include member store information received from the merchant server 403 and used to identify a specific member store, and may include a store name in characters (e.g. "xxxx youngtong") or a store ID code in numerical digits or characters (e.g. "123456"). Specifically, based on the member store information, the merchant server 403 may forward the TID received from the electronic device 400 to the corresponding merchant terminal 401.

The electronic device 400 may directly generate the first token and the first cryptogram. For example, the electronic device 400 may store encryption keys in the memory to generate a token and cryptogram, and may generate a token and cryptogram using the stored encryption keys at the time of payment. The electronic device 400 may obtain the first token and the first cryptogram from an external device, which may be a settlement server 405 or a payment gateway server 404 relaying data to and from the settlement server 405. For example, the electronic device 400 may connect to the payment gateway server 404 (e.g. Samsung Pay server), send a request for the first token and first cryptogram, and receive the first token and first cryptogram.

In step 807, the electronic device 400 sends the first payment information to the external device. For example, the electronic device 400 may issue a first payment request by sending the first payment information to the merchant server 403, which may send the first payment request based on the first payment information to the settlement server 405 via the payment gateway server 404, and receive a payment authorization indication. The merchant server 403 may send an indication for authorizing the first payment (partial advance payment) to the electronic device 400.

In step 809, the electronic device 400 determines whether to initiate an offline payment for the service. The electronic device 400 may receive a second payment command for the service from the user. That is, the electronic device 400 may receive a second request related to the payment for the service from the user. The second request may be for the balance payment to be processed in offline mode for the service partially paid through an advance or deposit payment.

When it is determined not to initiate the offline payment, step 809 is repeated. When it is determined to initiate the offline payment in step 809, the electronic device 400 generates second payment information in step 811. The electronic device 400 may use the TID obtained and stored at the time of the advance payment to generate the second payment information, and may determine the payment means and obtain user authentication needed for a payment using the determined payment means. The electronic device 400 may obtain a second token and a second cryptogram based on the user authentication. The first token and the second token may be different from each other, and the first cryptogram and the second cryptogram may be different from each other.

The electronic device 400 may store multiple TIDs, and may find a TID associated with a specific transaction among the stored TIDs at the time of the second payment (balance payment) for the transaction. The electronic device 400 may generate the second payment information based on the found TID.

The user may make a split payment for a service or for each of multiple services purchased in a given day. For example, the user may make a reservation request to restaurant A located in a particular region with an advance payment, and may connect to the homepage of a clothing store located near restaurant A while moving to restaurant A and make a reservation request for specific clothes. In this case, the electronic device 400 of the user may store a first TID issued at the time of reservation for restaurant A and store a second TID issued at the time of reservation for the clothing store. Later, when the user attempts to pay for the balance after arriving at restaurant A, the electronic device 400 of the user may find the first TID among the stored first and second TIDs while exchanging payment related information with the merchant terminal 401 installed in restaurant A, and send second payment information based on the found first TID to the merchant terminal 401 of restaurant A.

In step 813, the electronic device 400 sends the second payment information to the external device. For example, the electronic device 400 may issue a second payment request by sending the second payment information to the merchant terminal 401, which may forward the second payment information corresponding to the second payment request to the merchant server 403.

The merchant server 403 may compare the TID contained in the second payment information with the TID stored at the time of the advance payment for the service (TID matching). When the TID contained in the second payment information is identical to the TID stored at the time of the advance payment, the merchant server 403 may send settlement information to the merchant terminal 401.

TID matching may be performed by the merchant terminal 401. For example, the merchant terminal 401 may send a request for the TID issued at the time of the advance payment for the service to the merchant server 403 to obtain the TDI. The merchant terminal 401 may compare the TID contained in the second payment information with the obtained TID. If the TIDs are identical, the merchant terminal 401 may initiate the subsequent settlement process through a PG company and a VAN company.

In step 815, the electronic device 400 receives a final payment authorization indication for the service from the settlement server 405. For example, the merchant server 403 may forward the second payment request based on the second payment information to the settlement server 405 (e.g. card company server) via the payment gateway server 404 (e.g. PG company). The card company server may send a final payment authorization indication to the merchant server 403 via the PG company, and the merchant server 403 may forward the final payment authorization indication to the electronic device 400 via the merchant terminal 401.

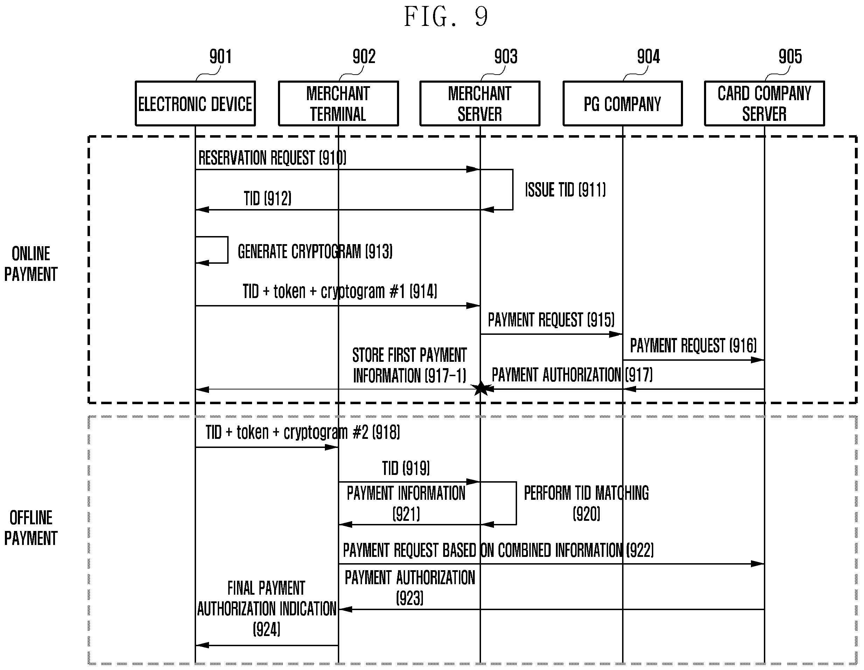

FIG. 9 is a sequence diagram depicting a payment method using an electronic device according to an embodiment of the present disclosure. In FIG. 9, the electronic device directly generates a token and cryptogram for payment by use of internally stored encryption keys.

Referring to FIG. 9, in step 910, the electronic device 901 receives a first request from the user and sends a reservation request based on the first request to the merchant server 903. In step 911, the merchant server 903 issues a TID corresponding to the first request as a reply to the reservation request. In step 912, the merchant server 903 sends the issued TID to the electronic device 901.

In step 913, the electronic device 901 generates first payment information for an advance payment based on the TID obtained from the merchant server 903. The first payment information may include the obtained TID, and a token and cryptogram based on user authentication. The electronic device 901 may directly generate a token and cryptogram based on internally stored encryption keys.

The keys for generating a token and cryptogram (e.g. limited-use key (LUK) or single-use key (SUK)) may be stored in the rich execution environment (REE) or the trusted execution environment (TEE). The REE and TEE may be capable of supporting multiple security levels in the electronic device 901. When the token and key are stored in the REE, the token and key may be encrypted and stored by the payment module of the TEE using a TEE key (e.g. device root key (DRK)). To make a payment, the payment gateway module may decrypt the encrypted token through the payment module. When the key or token for generating a cryptogram is stored in the TEE, the key or token may be encrypted and stored using the TEE key. For example, the REE may be a first execution environment having a first security level, and the TEE may be a second execution environment having a second security level higher than the first security level. The electronic device 901 may further include, but not be limited to, an execution environment having a third security level (e.g. third execution environment).

In step 914, the electronic device 901 sends the first payment information to the merchant server 903. In step 915, the merchant server 903 sends a payment request based on the received first payment information to the payment gateway server (i.e., PG company 904). In step 916, the PG company 904 forwards the payment request to the settlement server (i.e., card company server 905).

In step 917, the card company server 905 sends a payment authorization indication for the corresponding transaction to the merchant server 903 and the electronic device 901 via the PG company 904. When an advance payment for the service is authorized based on the first payment information, in step 917-1, the merchant server 903 (or the electronic device 901) may store the advance payment authorization information and the TID issued at the time of the advance payment. The merchant server 903 may send the advance payment related information to the merchant terminal 902 selling or providing the service.

The advance payment for reservation may proceed as an online payment process. Alternatively, the advance payment for reservation may proceed as an offline payment process. For example, when the user visits a clothing franchise store to buy a garment, the clothing franchise store may carry the appropriate style but not the appropriate size. If another franchise store is found to carry a garment fitting in style and size, the user may make a reservation for the garment by paying an advance to the first visited franchise store. In this case, the advance payment may proceed as an offline process, and may be processed in the same manner as a regular offline payment.

After completion of the advance payment in online or offline mode, the user may personally visit a member store offering the service and make a payment for the remaining balance. The electronic device 901 may generate second payment information in response to the balance payment request. The second payment information may include the TID stored at the time of the advance payment, and a token and cryptogram based on user authentication. The token and the cryptogram may differ respectively from those obtained at the time of the advance payment. The electronic device 901 may directly generate a token and cryptogram based on internally stored encryption keys.

In step 918, the electronic device 901 sends the second payment information to the merchant terminal 902. The electronic device 901 may send the second payment information to the merchant terminal 902 through short-range communication, such as at least one of Wi-Fi, Bluetooth, NFC, magnetic secure transmission (MST), and GNSS.

The electronic device 901 supporting MST may generate pulses corresponding to data to be sent by using electromagnetic signals and the pulses may generate a magnetic field signal. When the electronic device 901 sends the magnetic field signal to a POS terminal, the MST reader of the POS terminal may detect the magnetic field signal and recover the data by converting the detected magnetic field signal into an electrical signal.

The GNSS may correspond to the global positioning system (GPS), the global navigation satellite system (GNSS), the Beidou navigation satellite system, Galileo, or the European global satellite-based navigation system according to the geographical region or bandwidth. In the description, the abbreviations "GPS" and "GNSS" may be used interchangeably. Wired communication may use at least one of universal serial bus (USB), high definition multimedia interface (HDMI), recommended standard 232 (RS-232), and POTS. The network 162 may use at least one of a telecommunications network, a computer network (e.g. LAN or WAN), the Internet, and a telephone network.

In step 919, the merchant terminal 902 sends a payment request based on the second payment information to the merchant server 903.

In step 920, the merchant server 903 analyzes the second payment information and performs TID matching by comparing the TID contained in the second payment information with the stored TID issued at the time of the advance payment for the corresponding service.

After TID matching between the TID contained in the second payment information and the TID stored at the time of the advance payment, if the TIDs are identical, in step 921, the merchant server 903 sends payment information to the merchant terminal 902.

In step 922, the merchant terminal 902 sends a payment request based on the payment information received from the merchant server 903 to the card company server 905, via at least one of the PG company 904 and the VAN company. In another embodiment, the merchant terminal 902 may directly send the payment request to the card company server 905.

In step 923, the card company server 905 sends an authorization indication for the transaction to the merchant terminal 902 and the electronic device 901 via the PG company 904. When the balance payment based on the second payment information is authorized, in step 924, the merchant terminal 902 sends a final payment authorization indication to the electronic device 901.

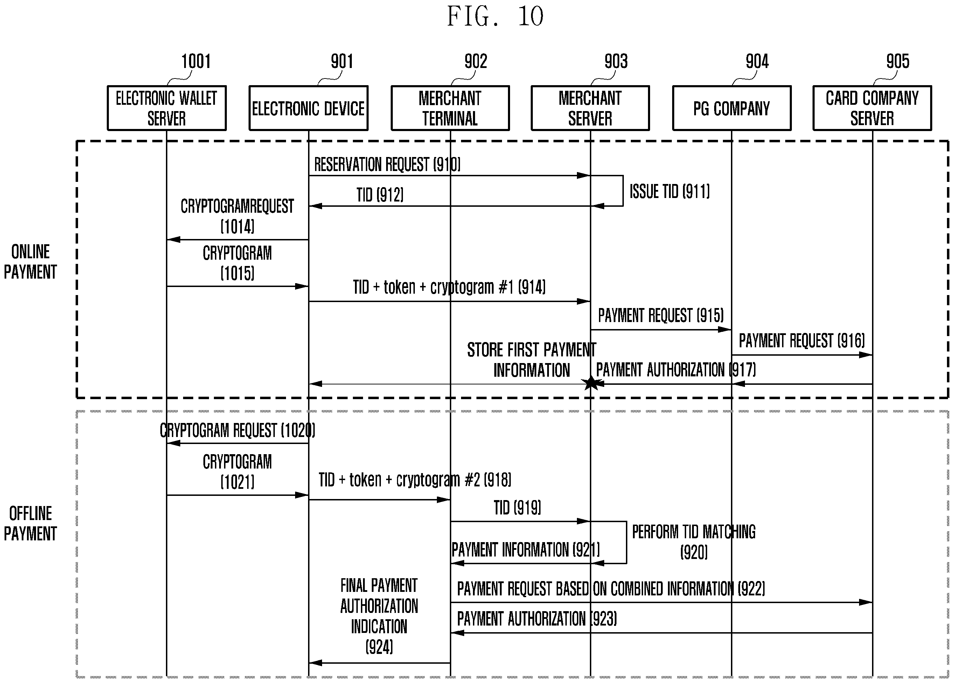

FIG. 10 is a sequence diagram depicting a payment method using a token and cryptogram obtained from an external device, according to an embodiment of the present disclosure. Unlike the embodiment shown in FIG. 9, the token and cryptogram are obtained from an external device in FIG. 10. The payment process described in FIG. 10 is identical to that described in FIG. 9 except for generation of the token and cryptogram. In FIGS. 9 and 10, the same reference symbols are given to the same or similar operations or configurations. In the following description on FIG. 10, only an operation or configuration different from the corresponding one in FIG. 9 is described.

The electronic device 901 may generate first payment information for an advance payment based on the TID obtained from the merchant server 903, and may also generate second payment information for a balance payment in offline mode. The first payment information and the second payment information may each include an obtained TID, and a token and cryptogram based on user authentication.

The electronic device 901 may use a payment module to obtain a token and cryptogram from an external device. The payment module may send a request for a token and cryptogram to the external device 1001 (e.g. electronic wallet server) and receive a token and cryptogram from the electronic wallet server 1001 (steps 1014 and 1015, steps 1020 and 1021). The electronic wallet server 1001 may be a type of a payment gateway server 404, such as a Samsung Pay server residing between the merchant terminal 902 and the settlement server 405 for relaying information and data needed for electronic payment and settlement.

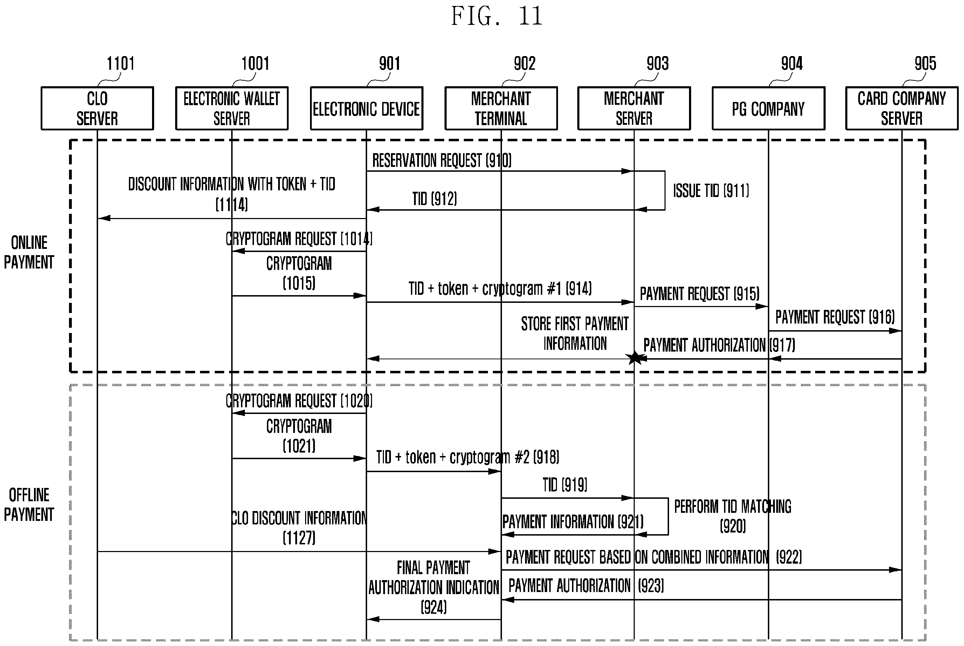

FIG. 11 is a sequence diagram depicting a payment method additionally supporting a card-linked offer (CLO) service, according to an embodiment of the present disclosure. Unlike the embodiment shown in FIG. 10, a CLO service is additionally applied in FIG. 11. The CLO service is an automatic discount applied when a specific credit card is used at a participating merchant such as an online shopping mall without a separate discount coupon. The CLO service may be made to fit the lifestyle and spending pattern of a customer and is expected to attract much attention. The payment process described in FIG. 11 is identical or similar to that described in FIG. 10 except for signal transmission related to the CLO service. In FIGS. 10 and 11, the same reference symbols are given to the same or similar operations or configurations. If applicable, the descriptions given in connection with FIGS. 9 and 10 are applied to the embodiment of FIG. 11.

Referring to FIG. 11, in step 910, the electronic device 901 receives a first request from the user and sends a reservation request based on the first request to the merchant server 903. In step 911, the merchant server 903 issues a TID corresponding to the first request as a reply to the reservation request. In step 912, the merchant server 903 sends the issued TID to the electronic device 901.

In step 913, the electronic device 901 generates first payment information for an advance payment based on the TID obtained from the merchant server 903. The first payment information may include the obtained TID, and a token and cryptogram based on user authentication. The electronic device 901 may directly generate a token and cryptogram based on internally stored encryption keys as shown in FIG. 9. In another embodiment, the electronic device 901 may use a payment module to send a request for a token and cryptogram to the electronic wallet server 1101 and receive a token and cryptogram from the external device 1001 (steps 1014 and 1015 in FIG. 10).

In step 1114, the electronic device 901 sends the TID, the token, the cryptogram, and discount information provided by the merchant server 903 to a CLO server 1101, which may register the discount information for the service based on the TID and token received from the electronic device 901.

In step 914, the electronic device 901 sends the first payment information containing the obtained TID, first token and first cryptogram to the merchant server 903. In step 915, the merchant server 903 sends a payment request based on the received first payment information to the PG company 904. In step 916, the PG company 904 forwards the payment request to the card company server 905.

In step 917, the card company server 905 sends a payment authorization indication for the corresponding transaction to the merchant server 903 and the electronic device 901 via the PG company 904. When an advance payment for the service is authorized based on the first payment information, in step 917-1, the merchant server 903 may store the advance payment authorization information and the TID issued at the time of the advance payment. The advance payment authorization information and the TID issued at the time of the advance payment may also be stored in the electronic device 901. The merchant server 903 may send the advance payment related information to the merchant terminal 902 selling or providing the service.

After completion of the advance payment in online or offline mode, the user may personally visit a member store offering the service and make a payment for the remaining balance. The electronic device 901 may generate second payment information in response to the balance payment request. The second payment information may include the TID stored at the time of the advance payment, and a token and cryptogram based on user authentication. The token and the cryptogram may differ respectively from those obtained at the time of the advance payment. The electronic device 901 may directly generate a token and cryptogram based on internally stored encryption keys.

The electronic device 901 may directly generate a token and cryptogram based on internally stored encryption keys, as shown in step 913 in FIG. 9. In another embodiment, as shown in FIG. 10, the electronic device 901 may use a payment module to obtain a token and cryptogram from an external device. The payment module may send a request for a token and cryptogram to the electronic wallet server 1001 and receive a token and cryptogram from the electronic wallet server 1001 (steps 1020 and 1021).

In step 918, the electronic device 901 sends the second payment information to the merchant terminal 902 through short-range communication.

In step 1127, the CLO server 1101 sends the merchant terminal 902 the registered discount information of the service based on the TID and token received from the electronic device 901. The CLO server 1101 may send the discount information of the service to the merchant terminal 902 when an offline payment is made by the electronic device 901 in response to a user command. The CLO server 1101 may send the discount information of the service to the merchant terminal 902 after the discount information is registered. Specifically, the CLO server 1101 may send the discount information of the service to the merchant terminal 902 in advance regardless of the point in time when the user makes an offline payment.

In step 919, the merchant terminal 902 sends a payment request based on the second payment information to the merchant s

In step 920, the merchant server 903 analyzes the second payment information and performs TID matching by comparing the TID contained in the second payment information with the stored TID issued at the time of the advance payment for the corresponding service.

After TID matching between the TID contained in the second payment information and the TID stored at the time of the advance payment, if the TIDs are identical, in step 921, the merchant server 903 sends payment information to the merchant terminal 902.

In step 922, based on the discount information received from the CLO server 1101 and the payment information received from the merchant server 903, the merchant terminal 902 sends a payment request for the discounted amount to the card company server 905.

In step 923, the card company server 905 sends an authorization indication for the transaction to the merchant server 903 and the electronic device 901 via the PG company 904. When the balance payment based on the second payment information is authorized, in step 924, the merchant terminal 902 sends a final payment authorization indication to the electronic device 901.

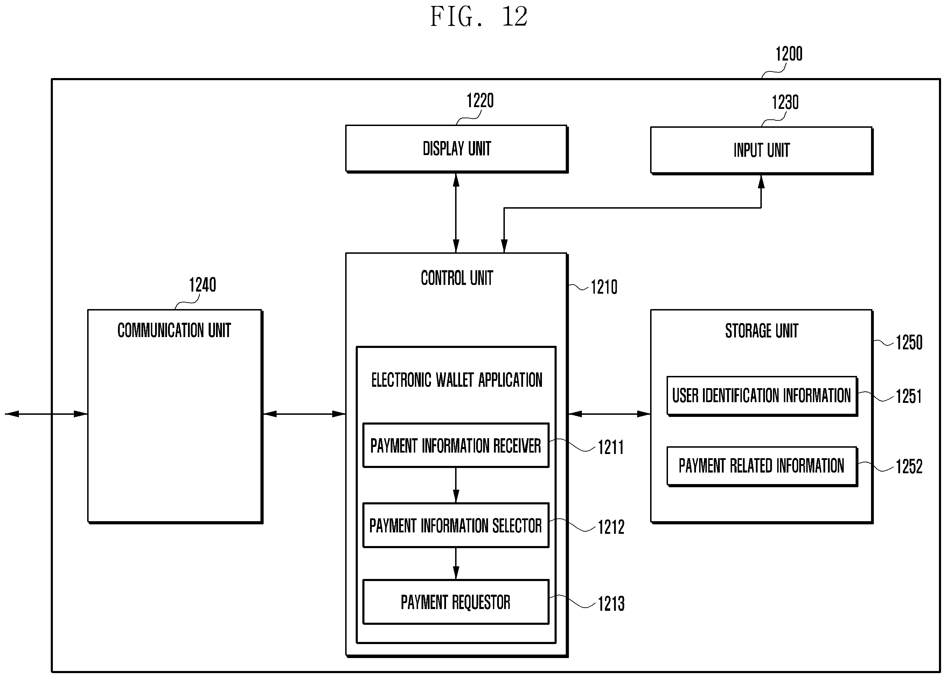

Prior to the description of FIG. 12, the following are aspects according to embodiments of the present disclosure, as previously described. An electronic device may include a communication interface that communicates with a first external device, and a processor functionally connected with the communication interface, wherein the processor may be configured to: receive a first request in relation to a payment; generate first payment information using a transaction identification corresponding to the payment based on at least the first request, send the first payment information to the first external device, receive a second request in relation to the payment, generate second payment information using the transaction identification based on at least the second request; and finalize the payment based on at least the second payment information.

The first request may be a reservation request for a service or goods and may be a request for a deposit payment to be processed in online mode. The second request may be a request for a balance payment to be processed in offline mode for the service or goods.

The processor may be configured to obtain the transaction identification from the first external device after sending a corresponding request to the first external device in response to the first request, obtain a first token and a first cryptogram based on user authentication, and generate the first payment information based on the transaction identification, the first token, and the first cryptogram. The first external device may be a merchant server or a merchant terminal.

The processor may be configured to directly generate the first token and the first cryptogram based on the user authentication and encryption keys stored in the memory, and obtain the first token and the first cryptogram from a second external device after sending a corresponding request to the second external device. The second external device may be an electronic wallet server residing between the merchant server and a settlement server for relaying data transfer. The processor may be configured to store the transaction identification obtained from the first external device in the memory, and send discount information supplied by the first external device to a third external device based on at least one of the transaction identification, the first token, and the first cryptogram.

The third external device may be a CLO server configured to register the discount information received from the electronic device and provide registered discount information to merchant terminals. The processor may be configured to obtain a second token and a second cryptogram in response to the second request, and generate the second payment information based on the transaction identification, the second token, and the second cryptogram. The processor may be configured to directly generate the second token and the second cryptogram based on the user authentication and encryption keys stored in the memory, and to obtain the second token and the second cryptogram from the second external device after sending a corresponding request to the second external device. The first token and the second token may be different from each other, and the first cryptogram and the second cryptogram may be different from each other.

FIG. 12 is a block diagram of an electronic device according to embodiments of the present disclosure. Referring to FIG. 12, the electronic device 1200 includes a control unit 1210, a display unit 1220, an input unit 1230, a communication unit 1240, and a storage unit 1250.

The control unit 1210 may execute an installed electronic wallet application, and may control various functions related to the embodiments of the present disclosure by executing the electronic wallet application.

The storage unit 1250 may store user identification information 1251 and payment related information 1252, such as at least one TID issued at the time of a split payment initiated by the user.

The user identification information 1251 stored in the storage unit 1250 may be presented as a barcode on the display unit 1220, and may also be sent through the communication unit 1240 to a merchant terminal.

The electronic wallet application may include a payment information receiver 1211, a payment information selector 1212, and a payment requestor 1213.

The payment information receiver 1211 may be used to collect information regarding payment means or discounts available to individual member stores of a merchant server 103. Collected payment means or discount information may be displayed on the display unit 1220.

The payment information selector 1212 may be used to select specific payment information corresponding to a payment means selected by the user through the input unit 1230. The payment requestor 1213 may be used to make a payment request using a payment means selected through the payment information selector 1212. The payment request may be sent to a merchant server to thereby initiate an online payment process.

When a payment means selected for use (e.g. payment means with the highest discount rate) is not applicable to the user, the electronic device 1200 may request the user to perform a registration procedure for the payment means through the electronic wallet application, enabling the user to continue the payment process using the selected payment means.

In the above-described embodiments, a functional unit or module may indicate a functional or structural combination of a hardware item and a software item driving the hardware item for at least partially realizing the subject matter of the present disclosure. It can be readily understood by those skilled in the art that a functional unit or module may be a logical group of codes, a logical group of hardware resources used to execute codes, or a combination thereof.

According to embodiments of the present disclosure, the electronic device may be used to support the following payment related operations.

The following are examples of use of the electronic device supporting split payment.
1. The user may use different payment means for a first payment (advance or deposit payment) and a second payment (balance payment) in a single transaction. For example, the user may make an advance payment using card A and make a balance payment using card B, since the merchant terminal or merchant server handling the second payment process performs TID matching. The user may also use the same payment means for the first payment and the second payment.
2. The first payment and the second payment may be performed by different users (different electronic devices). For example, user A may make a reservation for a specific product through a Samsung Pay application and transfer the TID obtained at the time of reservation to user B (electronic device of colleague B). Colleague B may finalize the payment in offline mode by use of the received TID.
3. The user may cancel authorization of the payment means used for reservation and make a full payment using a different payment means. For example, the user may make an advance payment using card A. Later, the user may visit an offline member store, cancel authorization of card A, and make a full payment using card B.
4. The user may make an advance payment using multiple payment means (e.g. card A and card B). Later, at the time of a balance payment, the user may select only one of the multiple payment means and cancel authorization of the remaining payment means.
5. The electronic device may be used in a shipping and logistics service handling second-hand goods or parcels. For example, the user may obtain a TID for a product by making a shipping reservation with a partial advance payment. When the product is delivered, the user may make a balance payment. Hence, it is possible to enhance convenience of the customer and increase credibility of the shipping company.
6. The electronic device may be used for payment together with gift cards. For example, a franchise member store may issue a TID as an online gift card and transmit the TID to a specific user (electronic device of the user). The user of the electronic device may receive a discount or payment exemption when an offline payment is made using the TID.

A programming module according to embodiments of the present disclosure may include one or more of the aforementioned components or may further include other additional components, or some of the aforementioned components may be omitted. Operations executed by a module, a programming module, or other component elements according to embodiments of the present disclosure may be executed sequentially, in parallel, repeatedly, or in a heuristic manner. Some operations may be executed according to another order or may be omitted, or other operations may be added.

While the present disclosure has been described with reference to certain embodiments thereof, it will be understood by those skilled in the art that various changes in form and detail may be made therein without departing from the spirit and scope of the present disclosure as defined by the appended claims.

## Claims

1. An electronic device comprising:
a communication interface that communicates with a first external device; and
a processor functionally connected with the communication interface,
wherein the processor is configured to:
receive a first request in relation to a payment;
generate first payment information using a transaction identification corresponding to the payment based on at least the first request;
send the first payment information to the first external device;
receive a second request in relation to the payment;
generate second payment information using the transaction identification based on at least the second request; and
finalize the payment based on at least the second payment information.

2. The electronic device of claim 1, wherein the first request is a reservation request for a service or goods or is a request for an advance payment to be processed in online mode, and
wherein the second request is a request for a balance payment to be processed in offline mode for the service or goods.

3. The electronic device of claim 2, wherein the processor is further configured to obtain the transaction identification from the first external device after sending a corresponding request to the first external device in response to the first request, obtain a first token and a first cryptogram based on user authentication, and generate the first payment information based on the transaction identification, the first token, and the first cryptogram.

4. The electronic device of claim 3, wherein the first external device is a merchant server or a merchant terminal.

5. The electronic device of claim 4, wherein the processor is further configured to directly generate the first token and the first cryptogram based on the user authentication and encryption keys stored in a memory.

6. The electronic device of claim 4, wherein the processor is further configured to obtain the first token and the first cryptogram from a second external device after sending a corresponding request to the second external device.

7. The electronic device of claim 6, wherein the second external device is an electronic wallet server residing between the merchant server and a settlement server for data transfer.

8. The electronic device of claim 2, wherein the processor is further configured to send discount information supplied by the first external device to a third external device based on at least one of the transaction identification, the first token, and the first cryptogram.

9. The electronic device of claim 8, wherein the third external device is a card-linked offer server configured to register the discount information received from the electronic device and provide registered discount information to a merchant terminal.

10. A method for payment using an electronic device, the method comprising:
receiving a first request in relation to the payment;
generating first payment information using a transaction identification corresponding to the payment based on at least the first request;
sending the first payment information to an external device;
receiving a second request in relation to the payment;
generating second payment information using the transaction identification based on at least the second request; and
finalizing the payment based on at least the second payment information.

11. The method of claim 10, wherein
wherein the first request is a reservation request for a service or goods or is a request for an advance payment to be processed in online mode, and wherein the second request is a request for a balance payment to be processed in offline mode for the service or goods.

12. The method of claim 11, wherein generating the first payment information comprises:
obtaining the transaction identification from a first external device after sending a corresponding request to the first external device in response to the first request;
obtaining a first token and a first cryptogram based on user authentication; and
generating the first payment information based on the transaction identification, the first token, and the first cryptogram,
and wherein generating the second payment information comprises:
obtaining a second token and a second cryptogram in response to the second request; and
generating the second payment information based on the transaction identification, the second token, and the second cryptogram.

13. The method of claim 12, wherein the first and second tokens and the first and second cryptograms are directly generated by the electronic device based on the user authentication and encryption keys stored in a memory.

14. The method of claim 12, wherein the first and second tokens and the first and second cryptograms are obtained from a second external device after sending a corresponding request to the second external device.

15. The method of claim 12, further comprising sending discount information supplied by the first external device to a third external device based on at least one of the transaction identification, the first token, and the first cryptogram.
